(19) Europäisches Patentamt
European Patent Office
Office européen des brevets

(11) **EP 4 610 687 A1**

(12) **EUROPEAN PATENT APPLICATION**

(43) Date of publication:
**03.09.2025 Bulletin 2025/36**

(21) Application number: **25160654.7**

(22) Date of filing: **27.02.2025**

(51) International Patent Classification (IPC):
**G01S 3/38** (2006.01)      **G01S 3/48** (2006.01)
**H01Q 21/06** (2006.01)      **H04B 1/06** (2006.01)

(52) Cooperative Patent Classification (CPC):
**G01S 3/38; G01S 3/48; H01Q 21/06;** H01Q 3/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2024 US 202463558473 P**

(71) Applicant: **TRON FUTURE TECH INC.**
**Hsinchu City 30069 (TW)**

(72) Inventors:
• HUNG, Kun-Chien
  **30069 Hsinchu City (TW)**
• LI, Chien-Te
  **30069 Hsinchu City (TW)**

(74) Representative: **Casalonga**
**Casalonga & Partners**
**Bayerstraße 71/73**
**80335 München (DE)**

(54) **PHASED ARRAY SYSTEM WITH DISTRIBUTED PROCESSING**

(57) A phased array system includes a plurality of subarray units. Each of the subarray units includes a set of antennas and a processing circuit. The set of antennas is arranged to couple an input signal incident on the phased array system into a set of electrical signals. The processing circuit, coupled to the set of antennas, is configured to calculate N subarray responses for N candidate directions according to the set of electrical signals and N steering vectors associated with the N candidate directions. The processing circuit of a first subarray unit included in the subarray units is further configured to generate N combined responses for the N candidate directions by combining subarray responses from the subarray units for each candidate direction, and determine directional information of the input signal according to the N combined responses.

FIG. 2

**Description**

**BACKGROUND**

The present disclosure relates to antenna systems, more particularly, to a phased array system employing distributed processing.

Phased array systems are advanced technologies utilized in a variety of applications, such as radar, communication, and remote sensing. The phased array system can adjust the relative phases of signals across multiple array elements to electronically steer and shape the beam without mechanical movement, thus offering enhanced adaptability and precision in dynamic environments. For example, in radar applications, the phased array system can provide faster response times and improved reliability due to the lack of moving parts. In addition, the phased array system may support simultaneous beamforming and signal processing to provide multifunction radar capabilities, thereby enhancing operational efficiency and adaptabilities.

**SUMMARY**

The described embodiments provide a phased array system employing distributed processing.

Some embodiments described herein may include a phased array system. The phased array system includes a plurality of subarray units. Each of the subarray units includes a set of antennas and a processing circuit. The set of antennas is arranged to couple an input signal incident on the phased array system into a set of electrical signals. The processing circuit, coupled to the set of antennas, is configured to calculate N subarray responses for N candidate directions according to the set of electrical signals and N steering vectors associated with the N candidate directions. N is an integer greater than one. The processing circuit of a first subarray unit included in the subarray units is further configured to generate N combined responses for the N candidate directions by combining subarray responses from the subarray units for each candidate direction, and determine directional information of the input signal according to the N combined responses.

Some embodiments described herein may include a phased array system. The phased array system includes a plurality of subarray units. Each of the subarray units includes a set of antennas and a processing circuit. The set of antennas is arranged to couple an input signal incident on the phased array system into a set of electrical signals. The processing circuit, coupled to the set of antennas, is configured to calculate N subarray responses for N candidate directions according to the set of electrical signals and N steering vectors associated with the N candidate directions. N is an integer greater than one. When a first subarray unit included in the subarray units is configured as a first type of unit, the processing circuit of the first subarray unit is further configured to determine directional information of the input signal according to respective subarray responses from the subarray units for the N candidate directions. When the first subarray unit is configured as a second type of unit different from the first type of unit, the processing circuit of the first subarray unit is further configured to output, for each candidate direction, a partial response comprising a corresponding subarray response.

Some embodiments described herein may include a phased array system. The phased array system includes a plurality of subarray units. Each of the subarray units includes a set of antennas and a processing circuit. The set of antennas is arranged to couple an input signal incident on the phased array system into a set of electrical signals. The processing circuit, coupled to the set of antennas, is configured to calculate N subarray responses for N candidate directions according to the set of electrical signals and N steering vectors associated with the N candidate directions. N is an integer greater than one. The subarray units include a first subarray unit, a second subarray unit and a third subarray unit. For each candidate direction, the processing circuit of the second subarray unit is configured to generate a partial response by combining a subarray response generated by the second subarray unit with a subarray response from the third subarray unit. The processing circuit of the first subarray unit is configured to determine directional information of the input signal by combining a subarray response generated by the first subarray unit with the partial response from the second subarray unit for each candidate direction.

With the use of the proposed distributed architecture, the subarray units can have similar storage capacity requirements, and achieve a balanced storage load without the need (or with almost no need) to relocate stored data to free up storage space. Additionally, with the use of the proposed distributed architecture, the subarray units can share the metric calculations while maintaining a balanced input/output traffic load. The proposed distributed architecture can also effectively reduce the design cost of control nodes. Furthermore, the phased array system utilizing the proposed distributed architecture can have storage complexity, computational complexity and traffic complexity that remain independent of (or nearly independent of) the total number of subarray units, thereby offering excellent scalability. Moreover, the proposed phased array system can selectively configure a subarray unit as a control unit, thus effectively addressing a single point of failure and providing a robust design.

## BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.

FIG. 1 is a diagram illustrating a phased array system in accordance with some embodiments of the present disclosure.

FIG. 2 is a diagram illustrating an exemplary phased array system in accordance with some embodiments of the present disclosure.

FIG. 3 is a diagram illustrating an exemplary phased array system in accordance with some embodiments of the present disclosure.

FIG. 4 is a diagram illustrating an exemplary phased array system in accordance with some embodiments of the present disclosure.

FIG. 5 is an implementation of the phased array system shown in FIG. 2 configured for performing different batch search tasks in accordance with some embodiments of the present disclosure.

FIG. 6 is another implementation of the phased array system shown in FIG. 2 configured for performing different batch search tasks in accordance with some embodiments of the present disclosure.

## DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the present disclosure may repeat reference numerals and/or letters in the various examples. This repetition is for the purpose of simplicity and clarity and does not in itself dictate a relationship between the various embodiments and/or configurations discussed.

Further, it will be understood that when an element is referred to as being "connected to" or "coupled to" another element, it may be directly connected to or coupled to the other element, or intervening elements may be present.

Moreover, spatially relative terms, such as "below," "above," "left," "right," and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

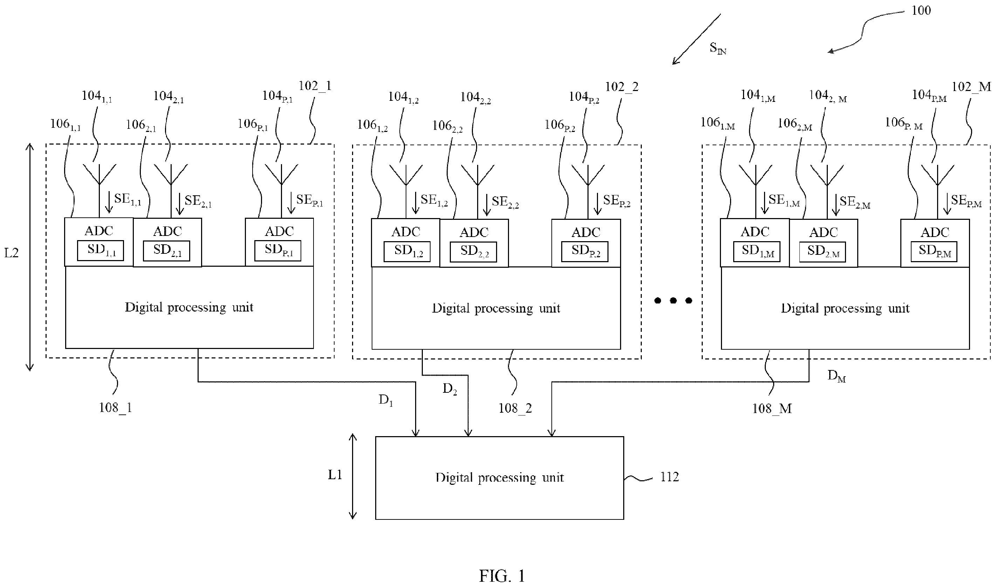

By evaluating the direction of arrival (DOA) of incoming signals, a phased array system can enable target tracking, navigation and/or spatial awareness. DOA estimation may utilize mathematical constructs, such as steering vectors, to evaluate spatial characteristics of received signals across multiple antenna elements and determine their DOA. To enhance beamforming performance and improve the accuracy of DOA estimation, phased array systems are increasingly incorporating a larger number of antennas. Referring to FIG. 1, a diagram of a phased array system is illustrated in accordance with some embodiments of the present disclosure. The phased array system 100 may be used to estimate the DOA of an input signal $S_{IN}$, which can be, but is not limited to, electromagnetic wave(s) (e.g., plane wave(s)) transmitted or reflected from a target. The phased array system 100 may include a plurality of subarray units 102_1 to 102_M, where M is an integer greater than one. Each subarray unit may include multiple antennas to meet the requirements for high-precision DOA estimation.

In the present embodiment, the subarray unit 102_i may include a plurality of antennas $104_{1,i}$ to $104_{P,i}$, a plurality of analog-to-digital converters (ADCs) $106_{1,i}$ to $106_{P,i}$, and a digital processing unit 108_i, where P is an integer greater than one and i is an integer from 1 to M. The antennas $104_{1,i}$ to $104_{P,i}$ are arranged to couple the input signal $S_{IN}$ into a plurality of electrical signals (e.g., a plurality of radio frequency (RF) signals) $SE_{1,i}$ to $SE_{P,i}$. The ADCs $106_{1,i}$ to $106_{P,i}$ are configured to convert the electrical signals $SE_{1,i}$ to $SE_{P,i}$ into the digital signals $SD_{1,i}$ to $SD_{P,i}$, respectively. The digital processing unit 108_i are configured to collect the digital signals $SD_{1,i}$ to $SD_{P,i}$ as the data $D_i$, and transmit the data $D_i$ to the digital processing unit 112. The digital processing unit 112 can process the data $D_1$ to $D_M$ outputted from the subarray units 102_1 to 102_M to search for a metric that satisfies a decision criterion, thereby estimating the DOA of the input signal $S_{IN}$.

By way of example but not limitation, the digital processing unit 112 may utilize an open-loop search method to estimate the DOA of the input signal $S_{IN}$. In a case where each subarray unit includes eight antennas (P = 8) and the phased array system 100 includes four subarray units (M = 4), given a search direction (or an angle) k, the digital processing unit 112 may calculate the metric f(k) as follows:

$$f(k) = \left| \sum_{i=1}^{32} r_i \cdot w_i(k) \right|^2, \qquad (1)$$

where $r_i$ represents the signal from the i-th antenna, and $w_i(k)$ represents the steering factor (or the weighting factor) corresponding to the i-th antenna in the search direction k. Based on the metrics f(k) corresponding to different search directions k, the digital processing unit 112 can determine the direction $k^0$ that corresponds to the maximum metric, thereby estimating the DOA of the input signal $S_{IN}$. The direction $k^0$ can be obtained using the arg max function, given as follows:

$$k^0 = arg\ max\ f(k) \qquad (2)$$

In other words, the phased array system 100 employs a hierarchical architecture with a first level L1 and a second level L2 for DOA estimation. The subarray units 102_1 to 102_M at the first level L1 are used for signal digitization and data transmission, while the digital processing unit 112 at the second level L2 is used for metric calculation and decision-making.

However, as the number of antennas increases, the hierarchical architecture shown in FIG. 1 may encounter issues such as load imbalance, heavy traffic load, limited scalability, and a critical single point of failure. For example, as the number of antennas at the first level L1 increases, the second level L2 not only bears a heavier input traffic load but also requires more storage space to accommodate the large volume of data from the first level L1. Additionally, the second level L2 is required to perform more complex computations, leading to a severe load imbalance between the first level L1 and the second level L2. Furthermore, since the data volume transmitted from the first level L1 to the second level L2 increases in relation to the number of subarray units in the first level L1, the time complexity of the load at the second level L2 can be expressed as O(N), which reduces the scalability of the phased array system 100. Moreover, if the digital processing unit 112 at the second level L2 fails, the phased array system 100 may encounter operational anomalies.

The present disclosure describes exemplary phased array systems, each of which utilizes distributed processing architecture to determine directional information (e.g., DOA), identify/track targets, and/or process incoming signals. For example, the exemplary phased array system may distribute the metric calculations across multiple subarray units (or respective processing circuits of the subarray units). In addition, the exemplary phased array system may preprocess the metrics calculated by adjacent subarray units to simplify computational complexity. The proposed phased array system utilizing distributed processing architecture can maintain balanced load distribution, scalability, and/or system stability. Further description is provided below.

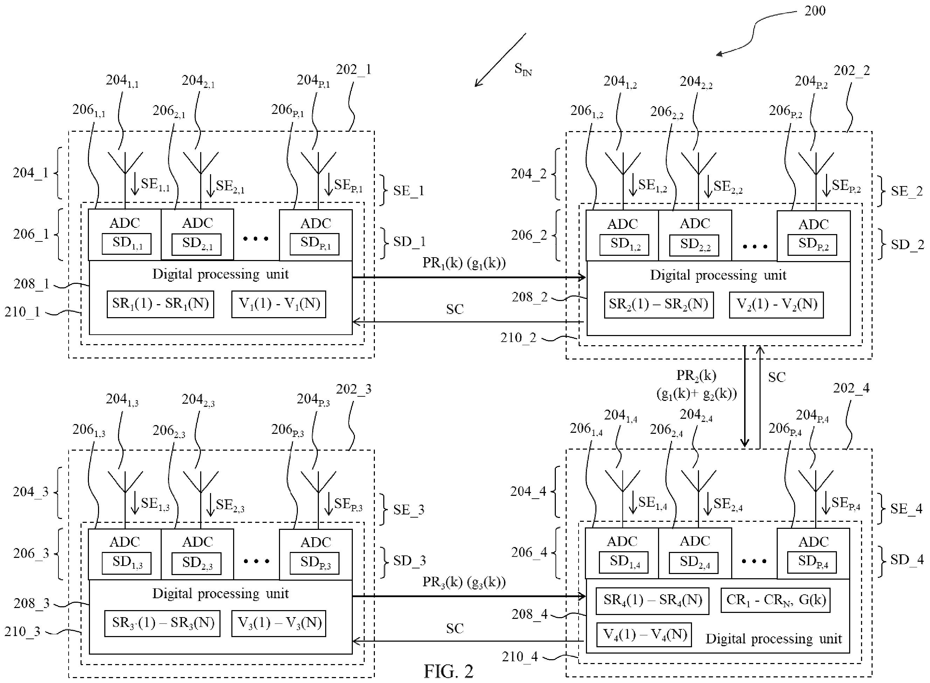

FIG. 2 is a diagram illustrating an exemplary phased array system in accordance with some embodiments of the present disclosure. The phased array system 200 may include, but is not limited to, a plurality of subarray units 202_1 to 202_4. Each subarray unit can process a part of the metric computation to implement the distributed processing architecture. The subarray unit 202_j (j = 1, 2, 3, 4) includes, but is not limited to, a set of antennas 204_j and a processing circuit 210_j. The set of antennas 204_j is arranged to couple the input signal $S_{IN}$ (e.g., as an electromagnetic signal) incident on the phased array system 200 into a set of electrical signals SE_j (e.g., as a set of RF signals). For example, the set of antennas 204_j may be implemented using (but not limited to) P antennas $204_{1,j}$ to $204_{P,j}$, and the set of electrical signals SE_j includes P electrical signals $SE_{1,j}$ to $SE_{P,j}$, where P is an integer greater than one. Note that the number and/or arrangement of subarray units shown in FIG. 2 is provided for illustrative purposes, and is not intended to limit the scope of the present disclosure.

The processing circuit 210_j (j = 1, 2, 3, 4), coupled to the set of antennas 204_j, is configured to calculate metric values for N search directions (also referred to as N candidate directions). For each search direction, each processing circuit can contribute to the metric calculation corresponding to the search direction. The calculated metric for each search direction can indicate the degree of correlation between the received signals and the search direction, or represent the response of the received signals in the search direction. The phased array system 200 can determine the directional information of the input signal $S_{IN}$ according to the calculated metrics corresponding to the N search directions.

In the present embodiment, the processing circuit 210_j is configured to calculate N subarray responses $SR_j(1)$ to $SR_j(N)$ for N candidate directions $A_1$ to $A_N$ according to the set of electrical signals SE_j and N steering vectors $V_j(1)$ to $V_j(N)$, where N is an integer greater than one. The steering vectors $V_j(1)$ to $V_j(N)$ correspond to the N candidate directions $A_1$ to $A_N$, respectively. For example, in a case where the phased array system 200 is configured to calculate the search metric corresponding to the candidate direction $A_1$, the processing circuit 210_1 can process the electrical signals $SE_{1,1}$ to $SE_{P,1}$ according to the corresponding steering vector $V_1(1)$, thereby generating the subarray response $SR_1(1)$; the processing

circuit 210_2 can process the electrical signals $SE_{1,2}$ to $SE_{P,2}$ according to the corresponding steering vector $V_2(1)$, thereby generate the subarray response $SR_2(1)$; and so on. The phased array system 200 can calculate the search metric corresponding to the candidate direction $A_1$ according to the combination or summation of the subarray responses $SR_1(1)$ to $SR_4(1)$ generated by the processing circuits 210_1 to 210_4.

The processing circuit 210_j can be configured to convert the set of electrical signals SE_j into a corresponding set of digital signals SD_j, and perform digital processing on the set of digital signals SD_j to obtain a corresponding subarray response. By way of example but not limitation, the processing circuit 210_j may include an analog-to-digital conversion circuit 206_j and a digital processing unit 208_j. The analog-to-digital conversion circuit 206_j is coupled to the corresponding set of antennas 204_j, and configured to convert the set of electrical signals SE_j into the set of digital signals SD_j (including the digital signals $SD_{1,1}$ to $SD_{P,1}$). The analog-to-digital conversion circuit 206_j may include, but is not limited to, P analog-to-digital converters (ADCs) $206_{1,j}$ to $206_{P,j}$, which are coupled to the antennas $204_{1,j}$ to $204_{P,j}$ respectively. In addition, the digital processing unit 208_j, coupled to the analog-to-digital conversion circuit 206_j, is configured to process the set of digital signals SD_j according to the N steering vectors $V_j(1)$ to $V_j(N)$ to thereby calculate the N subarray responses $SR_j(1)$ to $SR_j(N)$.

For illustrative purposes, the proposed distributed processing scheme is described below with reference to an open-loop search approach used for DOA metric calculations. Those skilled in the art will understand that the proposed distributed processing scheme may be applied to other DOA estimation methods, directional information determination, and/or signal processing operations for received signals without departing from the scope of the present disclosure.

Firstly, given a search direction k (e.g., one of candidate directions $A_1$ to $A_N$), the corresponding metric f(k) can be expressed as the inner product of the signal vector SG (representing the signals received at the antennas) and the steering vector V(k):

$$f(k) = |SG \cdot V(k)|^2 = \left\| \begin{bmatrix} r_{1,1} \\ \vdots \\ r_{P,1} \\ r_{1,2} \\ \vdots \\ r_{P,2} \\ r_{1,3} \\ \vdots \\ r_{P,3} \\ r_{1,4} \\ \vdots \\ r_{P,4} \end{bmatrix} \begin{bmatrix} w_{1,1}(k) \\ \vdots \\ w_{P,1}(k) \\ w_{1,2}(k) \\ \vdots \\ w_{P,2}(k) \\ w_{1,3}(k) \\ \vdots \\ w_{P,3}(k) \\ w_{1,4}(k) \\ \vdots \\ w_{P,4}(k) \end{bmatrix} \right\|^2$$

$$= \left| r_{1,1} \cdot w_{1,1}(k) + r_{2,1} \cdot w_{2,1}(k) + \cdots + r_{P,1} \cdot w_{P,1}(k) + r_{1,2} \cdot w_{1,2}(k) + r_{2,2} \cdot w_{2,2}(k) + \cdots + \right.$$

$$r_{P,2} \cdot w_{P,2}(k) + r_{1,3} \cdot w_{1,3}(k) + r_{2,3} \cdot w_{2,3}(k) + \cdots + r_{P,3} \cdot w_{P,3}(k) + r_{1,4} \cdot w_{1,4}(k) + r_{2,4} \cdot$$

$$\left. w_{2,4}(k) + \cdots + r_{P,4} \cdot w_{P,4}(k) \right|^2, \tag{3}$$

where $r_{1,1}$ to $r_{P,1}$ can represent the signals received at the antennas $204_{1,1}$ to $204_{P,1}$ of the subarray unit 202_1 (e.g., the digital signals $SD_{1,1}$ to $SD_{P,1}$ or the electrical signals $SE_{1,1}$ to $SE_{P,1}$) respectively, $r_{1,2}$ to $r_{P,2}$ can represent the signals received at the antennas $204_{1,2}$ to $204_{P,2}$ respectively, and so on. In addition, $w_{1,1}(k)$ to $w_{P,1}(k)$ can represent the weighting factors (or steering factors) in the steering vector V(k) associated with the search direction k for the antennas $204_{1,1}$ to $204_{P,1}$ respectively, $w_{1,2}(k)$ to $w_{P,2}(k)$ can represent the weighting factors (or steering factors) in the steering vector V(k) associated with the search direction k for the antennas $204_{1,2}$ to $204_{P,2}$ respectively, and so on. In other words, the metric f(k) corresponding to the search direction k can be expressed as the square of the sum of the products of the received signals and the corresponding weighting factors.

The metric f(k) can be represented as the sum of the responses corresponding to the subarray units 202_1, 202_2, 202_3 and 202_4:

$$f(k) = \left| \left( r_{1,1} \cdot w_{1,1}(k) + r_{2,1} \cdot w_{2,1}(k) + \cdots + r_{P,1} \cdot w_{P,1}(k) \right) + \left( r_{1,2} \cdot w_{1,2}(k) + r_{2,2} \cdot w_{2,2}(k) + \right. \right.$$

$$\left. \cdots + r_{P,2} \cdot w_{P,2}(k) \right) + \left( r_{1,3} \cdot w_{1,3}(k) + r_{2,3} \cdot w_{2,3}(k) + \cdots + r_{P,3} \cdot w_{P,3}(k) \right) + \left( r_{1,4} \cdot w_{1,4}(k) + \right.$$

$$\left. r_{2,4} \cdot w_{2,4}(k) + \cdots + r_{P,4} \cdot w_{P,4}(k) \right) \Big|^2 = \left| \sum_{i=1}^{P} r_{i,1} \cdot w_{i,1}(k) + \sum_{i=1}^{P} r_{i,2} \cdot w_{i,2}(k) + \sum_{i=1}^{P} r_{i,3} \cdot \right.$$

$$\left. w_{i,3}(k) + \sum_{i=1}^{P} r_{i,4} \cdot w_{i,4}(k) \right|^2 = \left| \sum_{j=1}^{4} \sum_{i=1}^{P} r_{i,j} \cdot w_{i,j}(k) \right|^2, \qquad (4)$$

where $\sum_{i=1}^{P} r_{i,1} \cdot w_{i,1}(k)$ represents the sum of the products of the received signals and the weighting factors associated with the subarray unit 202_1, $\sum_{i=1}^{P} r_{i,2} \cdot w_{i,2}(k)$ represents the sum of the products of the received signals and the weighting factors associated with the subarray unit 202_2, $\sum_{i=1}^{P} r_{i,3} \cdot w_{i,3}(k)$ represents the sum of the products of the received signals and the weighting factors associated with the subarray unit 202_3, and $\sum_{i=1}^{P} r_{i,4} \cdot w_{i,4}(k)$ represents the sum of the products of the received signals and the weighting factors associated with the subarray unit 202_4. Each summation term represents the contribution of the corresponding subarray unit to the metric f(k).

The calculation of the metric f(k) can be distributed across the processing circuits 210_1 to 210_4 (or the digital processing units 208_1 to 208_4). For example, the processing circuit 210_j (or the digital processing unit 208_j, where j = 1, 2, 3, 4) may determine a subarray response $g_j(k)$ for the search direction k by computing an inner product of a signal vector SG_j (representing the signals received at the antennas, such as a set of electrical signals SE_j or a set of digital signals SD_j) and a steering vector $V_j(k)$ (corresponding to the search direction k). The subarray response $g_j(k)$ can be one of the subarray responses SR_j(1) to SR_j(N), and can be expressed as follows:

$$g_j(k) = SG_j \cdot V_j(k) = \begin{bmatrix} r_{1,j} \\ \vdots \\ r_{P,j} \end{bmatrix} \begin{bmatrix} w_{1,j}(k) \\ \vdots \\ w_{P,j}(k) \end{bmatrix} = \sum_{i=1}^{P} r_{i,j} \cdot w_{i,j}(k). \qquad (5)$$

In addition, one of the processing circuits 210_1 to 210_4 (or one of the digital processing units 208_1 to 208_4) may combine (e.g., sum) the subarray responses $g_1(k)$ to $g_4(k)$ to generate a combined response G(k), thereby obtaining the metric f(k). The combined response G(k) can represent one of the N combined responses $CR_1$ to $CR_N$ corresponding to the N candidate directions $A_1$ to $A_N$:

$$f(k) = \left| \sum_{j=1}^{4} g_j(k) \right|^2 = |G(k)|^2. \qquad (6)$$

Based on the metrics f(k) corresponding to different search directions k, the phased array system 200 can determine the search direction $k^0$ that corresponds to the maximum metric, thereby estimating the DOA of the input signal $S_{IN}$. For example, one of the processing circuits 210_1 to 210_4 can be configured to calculate respective squared values of the N combined responses $CR_1$ to $CR_N$, and identify a candidate direction (e.g., the search direction $k^0$), which corresponds to a combined response having a maximum squared value, as the DOA of the input signal $S_{IN}$. Alternatively, a candidate direction that corresponds to a combined response having a maximum squared value can be identified as a direction closest to the DOA. By distributing the metric calculations across the subarray units 202_1 to 202_4 for the same candidate direction, the phased array system 200 can significantly reduce the computational load imbalance.

In addition, the phased array system 200 may utilize distributed data link architecture to distribute the data links for transmitting subarray responses across adjacent subarray units. Compared to architecture in which all data links for transmitting subarray responses converge to a single subarray unit configured for DOA estimation, the phased array system 200 can enhance input/output traffic load balancing.

For example, one of the subarray units 202_1 to 202_4 can be configured as a first type of unit, while each of the remaining subarray units can be configured as a second type of unit different from the first type of unit. The processing circuit (or the digital processing unit) within the first type of unit can determine the directional information (e.g. DOA) of the input signal $S_{IN}$ according to the respective subarray responses from subarray units 202_1 to 202_4 for the candidate

directions $A_1$ to $A_N$. For each candidate direction, the processing circuit (or digital processing unit) within the second type of unit can output a partial response that includes a subarray response corresponding to the candidate direction. The partial response may be the subarray response, or a combination of multiple subarray responses. The partial response may be outputted to an adjacent subarray unit configured as a first type of unit, or to an adjacent subarray unit configured as a second type of unit, thereby implementing distributed data link architecture.

For illustrative purposes, a subarray unit configured as a first type of unit may be referred to as a control unit or decision unit, and the digital processing unit thereof may be referred to as a control node or decision node. A subarray unit configured as a second type of unit may be referred to as a processing unit, and the digital processing unit thereof may be referred to as a processing node. However, these terms are not intended to limit the scope of the present disclosure. For each candidate direction, a processing circuit of a control unit (or a control node) may generate a corresponding combined response by combining its own subarray response with a partial response outputted by a processing circuit of a processing unit (or a processing node). Additionally or alternatively, for each candidate direction, a processing circuit of a processing unit (or a processing node) may generate a corresponding partial response by combining its own subarray response with a subarray response (or a partial response) from a processing circuit of another processing unit (or another processing node).

In the embodiment shown in FIG. 2, the subarray unit 202_4 can be configured as a control unit (i.e., the digital processing unit 208_4 can be configured as a control node), and the subarray units 202_1 to 202_3 may be configured as processing units (i.e., the digital processing units 208_1 to 208_3 can be configured as processing nodes). Some implementations of the operational process of the phased array system 200 are given below to further describe the proposed distributed processing architecture.

In operation, the processing circuit 210_4 (or the digital processing unit 208_4) can generate a search command indicating the direction to be searched, and distribute the search command to the subarray units configured as processing units. For example, the processing circuit 210_4 may send a command SC (which can indicate the search direction k, such as one of the N candidate directions $A_1$ to $A_N$) to the processing circuits 210_1 to 210_3, thereby notifying the processing circuits 210_1 to 210_3 that the direction to be searched is the search direction k. Each of the processing circuits 210_1 to 210_3 (or each of the digital processing units 208_1 to 208_3) may determine a corresponding steering vector (e.g., the steering vector $V_1(k)/V_2(k)/V_3(k)$ corresponding to the search direction k) according to the command SC. In the present embodiment, the processing circuit 210_2 may forward the command SC received from the processing circuit 210_4 to the processing circuit 210_1; the processing circuit 210_1 may determine the steering vector $V_1(k)$ according to the forwarded command SC. Additionally, the processing circuit 210_4 may determine the steering vector $V_4(k)$ according to the command SC generated therefrom.

For the search direction k, each processing circuit can calculate a subarray response by processing the signals received at a corresponding set of antennas according to a corresponding steering vector. In the present embodiment, the digital processing unit 208_1 can calculate the subarray response $g_1(k)$ according to the steering vector $V_1(k)$ and the set of digital signals SD_1, and provide $g_1(k)$ as a partial response $PR_1(k)$ to the digital processing unit 208_2 (or the processing circuit 210_2). The digital processing unit 208_2 can calculate the subarray response $g_2(k)$ according to the steering vector $V_2(k)$ and the set of digital signals SD_2, and sum the subarray response $g_2(k)$ and the partial response $PR_1(k)$ to generate a partial response $PR_2(k)$. The digital processing unit 208_3 can calculate the subarray response $g_3(k)$ according to the steering vector $V_3(k)$ and the set of digital signals SD_3, and provide the subarray response $g_3(k)$ as a partial response $PR_3(k)$ to the digital processing unit 208_4 (or the processing circuit 210_4). The digital processing unit 208_4 can calculate the subarray response $g_4(k)$ according to the steering vector $V_4(k)$ and the set of digital signals SD_4. Furthermore, the digital processing unit 208_4 can sum the subarray response $g_4(k)$, the partial response $PR_2(k)$, and the partial response $PR_3(k)$ to generate the combined response $G(k)$, thereby obtaining the metric $f(k)$.

In the present embodiment, a processing node may receive one or more partial responses outputted from one or more processing nodes via one or more data links. Each data link is arranged to connect adjacent processing nodes. The processing node may combine its own subarray response with the received one or more partial responses to generate its partial response. In other words, the data links for transmitting subarray responses can be distributed across adjacent processing nodes. For example, the digital processing unit 208_2 may receive the partial response $PR_1(k)$ outputted from the digital processing unit 208_1 via a data link, and combine the subarray response $g_2(k)$ with the partial response $PR_1(k)$ to generate the partial response $PR_2(k)$.

Note that at least one of the subarray units 202_1 to 202_4 can be selectively configured as a first type of unit or a second type of unit. For example, in some embodiments, the subarray unit 202_1 can be configured as a control unit (i.e., the digital processing unit 208_1 is configured as a control node), while each of the subarray units 202_2 to 202_4 can be configured as a second type of unit (i.e., each of the digital processing units 208_2 to 208_4 is configured as a processing node). As another example, the subarray units 202_1 to 202_4 may have the same or similar structures.

In addition, a control node may receive one or more partial responses outputted from one or more processing nodes to thereby obtain a subarray response from each processing node. The control node may combine its own subarray response with the one or more partial responses from the one or more processing nodes to obtain a combined result of all subarray responses. As the system scales up (e.g., as the number of subarray units in the phased array system increases), the data traffic inputted to the control node can remain substantially constant, and the computational complexity of the control node can also remain substantially constant.

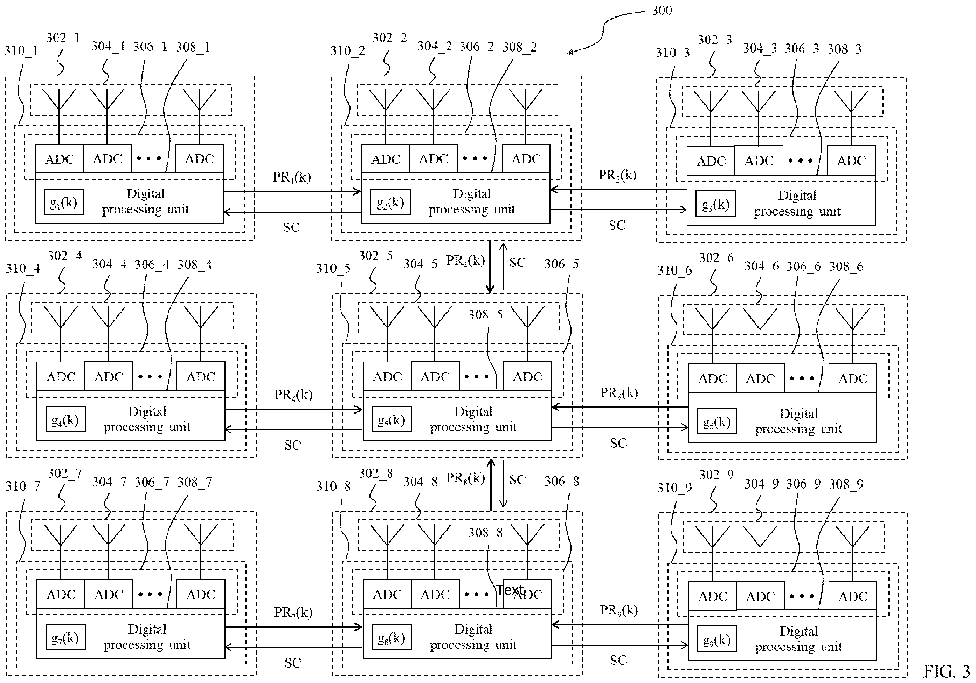

FIG. 3 is a diagram illustrating an exemplary phased array system in accordance with some embodiments of the present disclosure. The phased array system 300 may include, but is not limited to, a plurality of subarray units 302_1 to 302_9, each of which has a structure substantially identical/similar to that of the subarray unit shown in FIG. 2. For example, the subarray unit 302_j (j = 1, 2, ..., 9) may include a set of antennas 304_j (including P antennas) and a processing circuit 310_j. The processing circuit 310_j may include an analog-to-digital conversion circuit 306_j (including P analog-to-digital converters (ADCs)) and a digital processing unit 308_j. In the embodiment shown in FIG. 3, the subarray unit 302_5 can be configured as a control unit (i.e., the digital processing unit 308_5 can be configured as a control node), while each of the subarray units 302_1 to 302_4 and 302_6 to 302_9 can be configured as a processing unit (i.e., each of the digital processing units 308_1 to 308_4 and 308_6 to 308_9 can be configured as a processing node). The processing circuit 310_5 (or the digital processing unit 308_5) can determine the directional information (e.g. DOA) of the input signal $S_{IN}$ according to the respective subarray responses from the subarray units 302_1 to 302_9 corresponding to each candidate direction.

In operation, for the search direction k (e.g., one of multiple candidate directions), the processing circuit 310_5 (or the digital processing unit 308_5) can send a command SC indicative of the search direction k to the processing circuit of each processing unit (or each processing node). The processing circuit of each processing unit (or each processing node) can determine a corresponding steering vector according to the command SC. In the present embodiment, the processing circuit 310_2 can forward the command SC from the processing circuit 310_5 to the processing circuits 310_1 and 310_3; the processing circuit 310_8 can forward the command SC from the processing circuit 310_5 to the processing circuits 310_7 and 310_9.

For each candidate direction, the processing circuit of the control unit (or the control node) can combine subarray responses from the subarray units 302_1 to 302_9 to generate a corresponding combined response, and determine the directional information (e.g., DOA) of the input signal $S_{IN}$ according to combined responses corresponding to the candidate directions. In the present embodiment, for the search direction k (e.g., one of the candidate directions), each of the digital processing units 308_1, 308_3, 308_4, 308_6, 308_7 and 308_9 can output its own subarray response (i.e., one of the subarray responses $g_1(k)$, $g_3(k)$, $g_4(k)$, $g_6(k)$, $g_7(k)$ and $g_9(k)$) as a partial response (i.e., one of the partial responses $PR_1(k)$, $PR_3(k)$, $PR_4(k)$, $PR_6(k)$, $PR_7(k)$ and $PR_9(k)$). In addition, the digital processing unit 308_2 can combine its own subarray response $g_2(k)$ with the partial responses $PR_1(k)$ and $PR_3(k)$ from the adjacent digital processing units 308_1 and 308_3 to generate the partial response $PR_2(k)$ (i.e., the sum of the subarray responses $g_1(k)$, $g_2(k)$ and $g_3(k)$). The digital processing unit 308_8 can combine its own subarray response $g_8(k)$ with the partial responses $PR_7(k)$ and $PR_9(k)$ from the adjacent digital processing units 308_7 and 308_9 to generate the partial response $PR_8(k)$ (i.e., the sum of the subarray responses $g_7(k)$, $g_8(k)$ and $g_9(k)$). The digital processing unit 308_5 can combine the subarray response $g_5(k)$, the partial response $PR_2(k)$, the partial response $PR_4(k)$, the partial response $PR_6(k)$ and the partial response $PR_8(k)$ to generate a combined response, thereby obtaining a metric corresponding to the search direction k.

Note that as the system scales from the phased array system 200 shown in FIG. 2 (e.g., a 2×2 subarray unit configuration) to the phased array system 300 shown in FIG. 3 (e.g., a 3×3 subarray unit configuration) and further expands to include more subarray units, the maximum data storage requirement, computational load and input/output traffic for each subarray unit can remain substantially constant. By way of example but not limitation, the maximum data storage requirement, computational load, and input/output traffic for each subarray unit can be maintained within the limits corresponding to at most four data links. In other words, the amount of stored data, computational complexity, and input/output traffic associated with the proposed phased array system can remain constant as the number of subarray units increases. The storage complexity, computational complexity, and traffic complexity associated with the proposed phased array system can be O(1). Thus, the proposed phased array system can exhibit excellent scalability.

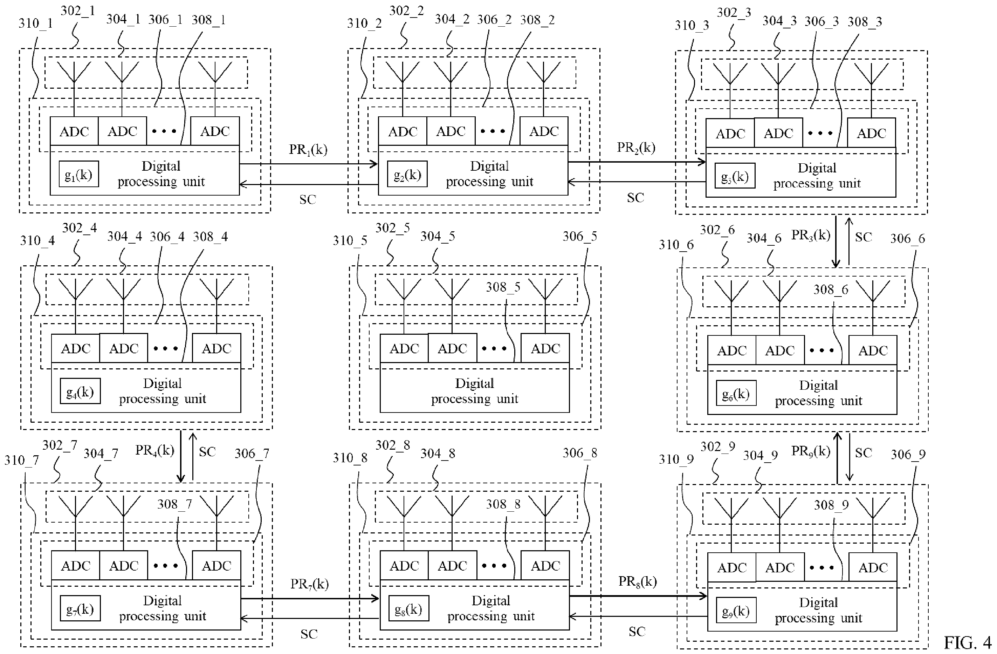

In some embodiments, the proposed subarray unit can be selectively configured as a control unit or a processing unit (i.e., the digital processing unit within the subarray unit can be selectively configured as a control node or a processing node), thereby achieving a robust phased array system. For example, as shown in FIG. 4, when the subarray unit 302_5 configured as a control unit encounters an anomaly or failure, the subarray unit 302_5 (or the digital processing unit 308_5) may be disabled, or the data link(s) connected to the subarray unit 302_5 (or the digital processing unit 308_5) may be disabled, thereby preventing the subarray unit 302_5 from participating in the operation of the phased array system 300. Additionally, the subarray unit 302_6 may be reconfigured as a control unit (i.e., the digital processing unit 308_6 may be reconfigured as a control node) to maintain the normal operation of the phased array system 300. In the embodiment shown in FIG. 4, the digital processing unit 308_6 may send a command SC indicative of the search direction k (e.g., one of multiple candidate directions) to the subarray units 302_1 to 302_4 and 302_7 to 302_9. The respective subarray responses from the subarray units 302_1 to 302_4 and 302_7 to 302_9 can be delivered to the subarray unit 302_6 via one or more corresponding data links. In other words, the data transmission path(s) of the phased array system 300 can be reconfigured.

By selectively configuring a subarray unit as a control unit (or selectively configuring a digital processing unit as a control nodes), the proposed phased array system can handle a single point of failure, thereby providing a robust design. As those skilled in the art can understand the operation of the phased array system 300 shown in FIG. 3 and FIG. 4 after reading the above paragraphs directed to FIG. 1 and FIG. 2, similar description is not repeated here for brevity.

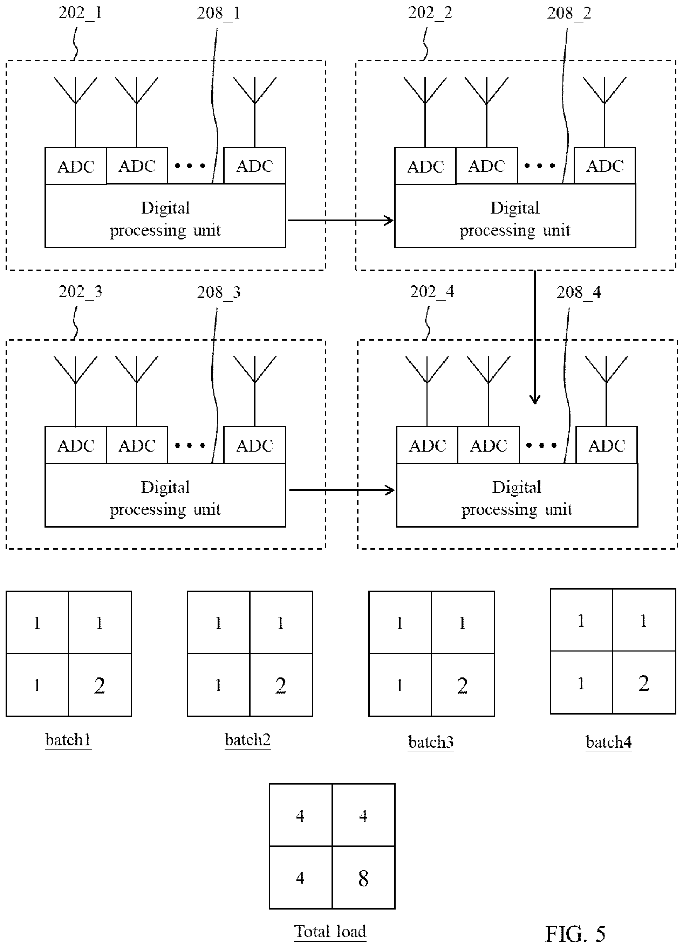

In some embodiments, the proposed subarray unit can be selectively configured as a control unit or a processing unit (i.e., the digital processing unit of the subarray unit can be selectively configured as a control node or a processing node), thereby realizing a phased array system with load balancing. For example, referring to FIG. 5, an implementation of the phased array system 200 shown in FIG. 2 configured for performing different batch search tasks batch1, batch2, batch3 and batch4 is illustrated in accordance with some embodiments of the present disclosure. In the embodiment shown in FIG. 5, the batch search tasks batch1, batch2, batch3 and batch4 may correspond to different search distances or different Doppler frequencies. During the execution of each batch search task in the phased array system 200, the subarray unit 202_4 is configured as a control unit (i.e., the digital processing unit 208_4 is configured as a control node), while the subarray units 202_1 to 202_3 are configured as processing units (i.e., the digital processing units 208_1 to 208_3 are configured as processing nodes). For each batch search task, the computational and data transmission loads of the digital processing units 208_1, 208_2, 208_3 and 208_4 may be represented as 1, 1, 1 and 2, respectively. Therefore, the total load for executing the batch search tasks batch1 to batch4 by the digital processing units 208_1, 208_2, 208_3 and 208_4 can be represented as 4, 4, 4 and 8, respectively.

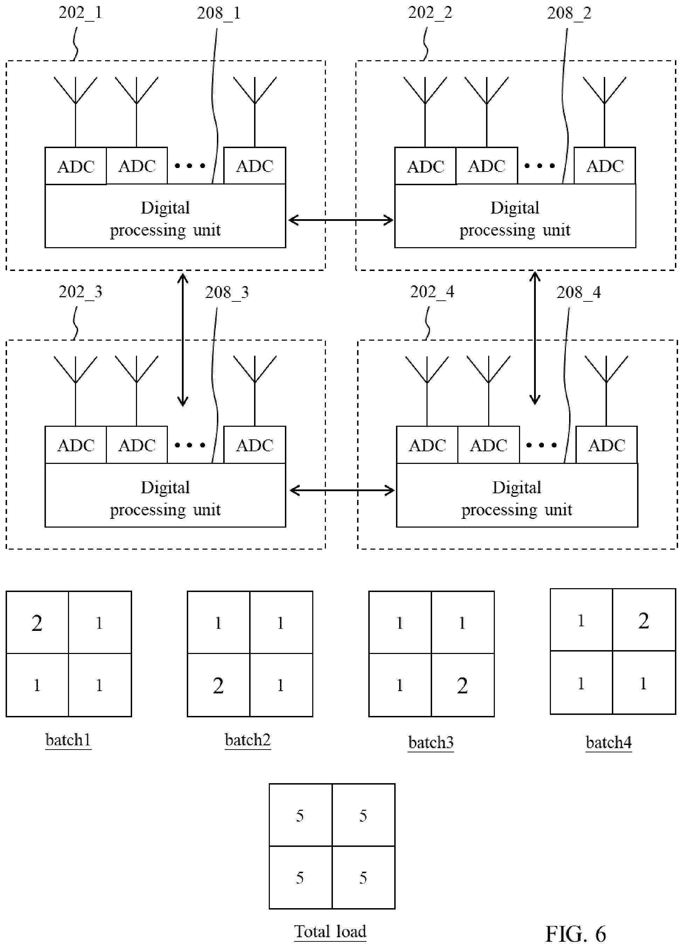

Referring to FIG. 6, another implementation of the phased array system 200 shown in FIG. 2 configured for performing different the batch search tasks batch1, batch2, batch3 and batch4 is illustrated in accordance with some embodiments of the present disclosure. In the embodiment shown in FIG. 6, when the phased array system 200 is configured to execute the batch search task batch1, the subarray unit 202_1 is configured as a control unit, while the other subarray units are configured as processing units. The computational and data transmission loads associated with the digital processing units 208_1, 208_2, 208_3 and 208_4 can be represented as 2, 1, 1 and 1, respectively. When the phased array system 200 is configured to execute the batch search task batch2, the subarray unit 202_3 is configured as a control unit, while the other subarray units are configured as processing units. The computational and data transmission loads associated with the digital processing units 208_1, 208_2, 208_3 and 208_4 can be represented as 1, 1, 2 and 1, respectively. When the phased array system 200 is configured to execute the batch search task batch3, the subarray unit 202_4 is configured as a control unit, while the other subarray units are configured as processing units. The computational and data transmission loads associated with the digital processing units 208_1, 208_2, 208_3 and 208_4 can be represented as 1, 1, 1 and 2, respectively. When the phased array system 200 is configured to execute the batch search task batch4, the subarray unit 202_2 is configured as a control unit, while the other subarray units are configured as processing units. The computational and data transmission loads associated with the digital processing units 208_1, 208_2, 208_3 and 208_4 can be represented as 1, 2, 1 and 1, respectively. Thus, the total load for executing the batch search tasks batch1 to batch4 by the digital processing units 208_1, 208_2, 208_3 and 208_4 can be represented as 5, 5, 5 and 5, respectively. In other words, the computational and data transmission load can be evenly distributed across the digital processing units 208_1, 208_2, 208_3 and 208_4. Compared to the system configuration shown in FIG. 5, the dynamic configuration shown in FIG. 6 can enable load balancing.

As those skilled in the art can understand the operation of the phased array system 200 shown in FIG. 5 and FIG. 6 after reading the above paragraphs directed to FIG. 1 through FIG. 4, similar description is not repeated here for brevity.

With the use of the proposed distributed architecture, the subarray units can have similar storage capacity requirements, and achieve a balanced storage load without the need (or with almost no need) to relocate stored data to free up storage space. Additionally, with the use of the proposed distributed architecture, the subarray units can share the metric calculations while maintaining a balanced input/output traffic load. The proposed distributed architecture can also effectively reduce the design cost of control nodes. Furthermore, the phased array system utilizing the proposed distributed architecture can have storage complexity, computational complexity and traffic complexity that remain independent of (or nearly independent of) the total number of subarray units, thereby offering excellent scalability. Moreover, the proposed phased array system can selectively configure a subarray unit as a control unit, thus effectively addressing a single point of failure and providing a robust design.

As used herein, the terms "substantially" are used to describe and account for small variations. When used in conduction with an event or circumstance, the terms can refer to instances in which the event of circumstance occurs precisely as well as instances in which the event or circumstance occurs to a close approximation. As used herein with respect to ta given value or range, the term "substantially" generally means within $\pm 10\%$, $\pm 5\%$, $\pm 1\%$, or $\pm 0.5\%$ of the given value or range. Ranges can be expressed herein as from one endpoint to another endpoint or between two endpoints. All ranges disclosed herein are inclusive of the endpoints, unless specified otherwise. In addition, when referring to numerical values or characteristics as "substantially" the same, the term can refer to the values lying within $\pm 10\%$, $\pm 5\%$, $\pm 1\%$, or $\pm 0.5\%$ of an average of the values.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

**Claims**

1. A phased array system, comprising:

   a plurality of subarray units, each of the subarray units comprising:

   a set of antennas, arranged to couple an input signal incident on the phased array system into a set of electrical signals; and
   a processing circuit, coupled to the set of antennas, the processing circuit being configured to calculate N subarray responses for N candidate directions according to the set of electrical signals and N steering vectors associated with the N candidate directions, N being an integer greater than one;

   wherein the processing circuit of a first subarray unit included in the subarray units is further configured to generate N combined responses for the N candidate directions by combining subarray responses from the subarray units for each candidate direction, and determine directional information of the input signal according to the N combined responses.

2. The phased array system of claim 1, wherein the directional information comprises a direction of arrival of the input signal; the processing circuit of the first subarray unit is configured to calculate respective squared values of the N combined responses, and identify a candidate direction corresponding to a combined response having a maximum squared value as the direction of arrival.

3. The phased array system of claim 1 or 2, wherein the subarray units further comprise a second subarray unit; for each candidate direction, the processing circuit of the second subarray unit is configured to output a partial response comprising a subarray response generated by the processing circuit of the second subarray unit, and the processing circuit of the first subarray unit is configured to generate a combined response by combining a subarray response generated by the processing circuit of the first subarray unit with the partial response outputted from the second subarray unit.

4. The phased array system of claim 3, wherein the subarray units further comprise a third subarray unit; for each candidate direction, the processing circuit of the second subarray unit is configured to generate the partial response by combining the subarray response generated by the processing circuit of the second subarray unit with a subarray response from the processing circuit of the third subarray unit.

5. The phased array system of claim 1 or 2, wherein the subarray units further comprise a second subarray unit; the processing circuit of the first subarray unit is further configured to send a command indicative of one of the N candidate directions to the processing circuit of the second subarray unit, and the processing circuit of the second subarray unit is configured to determine a corresponding steering vector according to the command.

6. The phased array system of claim 5, wherein the subarray units further comprise a third subarray unit; the processing circuit of the second subarray unit is configured to forward the command to the processing circuit of the third subarray unit; the processing circuit of the third subarray unit is configured to determine a corresponding steering vector according to the command.

7. The phased array system of any one of claims 1 to 6, wherein the processing circuit of each subarray unit is configured to determine a subarray response for each candidate direction by computing an inner product of a corresponding steering vector and a signal vector representing the set of electrical signals.

8. The phased array system of any one of claims 1 to 7, wherein the processing circuit of each subarray unit comprises:

   an analog-to-digital conversion circuit, coupled to the set of antennas, the analog-to-digital conversion circuit being configured to convert the set of electrical signals into a set of digital signals; and

a digital processing unit, coupled to the analog-to-digital conversion circuit, the digital processing unit being configured to calculate the N subarray responses by processing the set of digital signals according to the N steering vectors.

9. A phased array system, comprising:

a plurality of subarray units, each of the subarray units comprising:

a set of antennas, arranged to couple an input signal incident on the phased array system into a set of electrical signals; and
a processing circuit, coupled to the set of antennas, the processing circuit being configured to calculate N subarray responses for N candidate directions according to the set of electrical signals and N steering vectors associated with the N candidate directions, N being an integer greater than one;

wherein when a first subarray unit included in the subarray units is configured as a first type of unit, the processing circuit of the first subarray unit is further configured to determine directional information of the input signal according to respective subarray responses from the subarray units for the N candidate directions; when the first subarray unit is configured as a second type of unit different from the first type of unit, the processing circuit of the first subarray unit is further configured to output, for each candidate direction, a partial response comprising a corresponding subarray response.

10. The phased array system of claim 9, wherein the processing circuit of the first subarray unit is configured to combine, for each of the N candidate directions, subarray responses from the subarray units to generate a combined response, and determine the directional information according to N combined responses corresponding to the N candidate directions.

11. The phased array system of claim 10, wherein the subarray units further comprise a second subarray unit configured as the second type of unit; for each candidate direction, the processing circuit of the second subarray unit is configured to output a partial response comprising a subarray response generated by the processing circuit of the second subarray unit, and the processing circuit of the first subarray unit is configured to generate a combined response by combining a subarray response generated by the processing circuit of the first subarray unit with the partial response outputted from the second subarray unit.

12. The phased array system of claim 9, wherein:

the subarray units further comprise a second subarray unit configured as the second type of unit; for each candidate direction, the processing circuit of the first subarray unit is configured to generate the partial response by combining a subarray response generated by the processing circuit of the first subarray unit with a subarray response from the second subarray unit;
the subarray units further comprise a second subarray unit configured as the first type of unit; for each candidate direction, the partial response outputted from the processing circuit of the first subarray unit is delivered to the processing circuit of the second subarray unit; or
the subarray units further comprise a second subarray unit configured as the second type of unit; the processing circuit of the first subarray unit is further configured to send a command indicative of one of the N candidate directions to the processing circuit of the second subarray unit, and the processing circuit of the second subarray unit is configured to determine a corresponding steering vector according to the command.

13. The phased array system of claim 9, wherein the subarray units further comprise a second subarray unit configured as the first type of unit; the processing circuit of the second subarray unit is configured to send a command indicative of one of the N candidate directions to the processing circuit of the first subarray unit, and the processing circuit of the first subarray unit is configured to determine a corresponding steering vector according to the command.

14. The phased array system of claim 13, wherein the subarray units further comprise a third subarray unit configured as the second type of unit; the processing circuit of the first subarray unit is configured to forward the command to the processing circuit of the third subarray unit; the processing circuit of the third subarray unit is configured to determine a corresponding steering vector according to the command.

15. The phased array system of claim 9, wherein the processing circuit of each subarray unit is configured to determine a subarray response for each candidate direction by computing an inner product of a corresponding steering vector and a signal vector representing the set of electrical signals.

FIG. 1

EP 4 610 687 A1

FIG. 2

FIG. 3

FIG. 4

202_1      208_1                    202_2      208_2

ADC    ADC    • • •    ADC          ADC    ADC    • • •    ADC

Digital
processing unit

Digital
processing unit

202_3      208_3                    202_4      208_4

ADC    ADC    • • •    ADC          ADC    ADC    • • •    ADC

Digital
processing unit

Digital
processing unit

| 1 | 1 |
|---|---|
| 1 | 2 |

batch1

| 1 | 1 |
|---|---|
| 1 | 2 |

batch2

| 1 | 1 |
|---|---|
| 1 | 2 |

batch3

| 1 | 1 |
|---|---|
| 1 | 2 |

batch4

| 4 | 4 |
|---|---|
| 4 | 8 |

Total load

FIG. 5

FIG. 6

Europäisches
Patentamt
European
Patent Office
Office européen
des brevets

## EUROPEAN SEARCH REPORT

**Application Number**

EP 25 16 0654

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP 2009 290294 A (MITSUBISHI ELECTRIC CORP) 10 December 2009 (2009-12-10)<br>* paragraph [0009] - paragraph [0014]; figure 2 * | 1-8<br><br>9-15 | INV.<br>G01S3/38<br>G01S3/48<br>H01Q21/06 |
| | ----- | | |
| A | MADETI SANTHI SWAROOP ET AL: "Low Complexity Beam Steering Antenna Array Using Beamforming Network Subarrays", 2022 IEEE 22ND ANNUAL WIRELESS AND MICROWAVE TECHNOLOGY CONFERENCE (WAMICON), IEEE,<br>27 April 2022 (2022-04-27), pages 1-4, XP034131882,<br>DOI: 10.1109/WAMICON53991.2022.9786197<br>[retrieved on 2022-06-07]<br>* figure 1 * | 1-15 | ADD.<br>H04B1/06 |
| | ----- | | |

**TECHNICAL FIELDS SEARCHED (IPC)**

G01S
H01Q
H04B

The present search report has been drawn up for all claims

| Place of search | Date of completion of the search | Examiner |
|---|---|---|
| Munich | 19 June 2025 | Ribbe, Jonas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 0654

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | Publication date |
|---|---|---|---|
| JP 2009290294 A | 10-12-2009 | NONE | |